# EUROPÄISCHE PATENTANMELDUNG

(11) **EP 0 887 456 A1**
(43) Veröffentlichungstag der Anmeldung: **30.12.1998**
(21) Anmeldenummer: 98107574.0
(22) Anmeldetag: 25.04.1998
(51) Int. Cl.: D06F 37/20, F16F 9/54, F16F 1/38

(54) **Befestigungseinrichtung zur Befestigung eines Schwingungsdämpfers einer Waschmaschine**

(30) Priorität: 18.06.1997 DE 19725706
(71) Anmelder: SUSPA COMPART Aktiengesellschaft, 90518 Altdorf (DE)
(72) Erfinder: Civillini, Franco, Dr.-Ing., 40121 Bologna (IT); Rössner, Reiner, 90518 Altdorf (DE)
(74) Vertreter: Rau, Manfred, Dr. Dipl.-Ing.

(57) **Zusammenfassung**

Befestigungseinrichtung zur Befestigung eines Schwingungsdämpfers (11) zwischen einem Waschaggregat (2) und einem Grundrahmen (5) einer Waschmaschine weist ein Befestigungselement auf, das eine aus mindestens zwei quer zu einer Schwenkachse (17) aufspreizbaren Hülsensegmenten (29, 30) gebildete Befestigungshülse (24) und ein an der Innenfläche (51) der Befestigungshülse (24) angepaßtes und in diese einschiebbares, die Befestigungshülse (24) aufspreizendes und in einem Lagerbock (16) in Richtung der Schwenkachse (17) festlegendes Spreizelement (25) aufweist.

## Beschreibung

Die Erfindung betrifft eine Befestigungseinrichtung nach dem Oberbegriff des Anspruches 1.

Aus der EP 0 217 234 A1 ist eine derartige Befestigungseinrichtung bekannt, die einen die Wangen des Lagerbocks und die Gelenkbüchse durchsetzenden gegebenenfalls hohl ausgebildeten Bolzen aufweist, der in Richtung der Schwenkachse, also in seiner Längsrichtung durch eine am Lagerbock befestigte Sicherungsnase gehalten wird. Die Standzeit des in der Regel aus Kunststoff bestehenden Befestigungsbolzens ist nicht ausreichend. Des weiteren ermöglicht diese bekannte Lösung keinen Toleranzausgleich. Wenn dagegen ein Toleranzausgleich durch entsprechende Dimensionierung erfolgen soll, dann ist diese bekannte Befestigungseinrichtung nicht montagefreundlich, da hohe Reibungskräfte beim Einschieben des Bolzens überwunden werden müssen.

Der Erfindung liegt die Aufgabe zugrunde, eine Befestigungseinrichtung der gattungsgemäßen Art so auszugestalten, daß eine einfache Montage und eine hohe Standzeit erreichbar ist.

Diese Aufgabe wird erfindungsgemäß durch die Merkmale im Kennzeichnungsteil des Anspruches 1 gelöst. Die aus zwei Hülsensegmenten bestehende Befestigungshülse läßt sich in ungespreiztem Zustand praktisch kräftefrei in den Lagerbock und die Gelenkbüchse einführen. Das Spreizen erfolgt anschließend durch Einschieben des zylindrischen Spreizelementes. Die erfindungsgemäße Lösung ermöglicht es, daß durch sie auch einfache bisher verwendete Schraubverbindungen ersetzt werden, ohne daß an der Waschmaschine oder am Schwingungsdämpfer konstruktive Änderungen vorgenommen werden müssen. Insofern ist die erfindungsgemäße Befestigungseinrichtung auch bei vorhandenen Waschmaschinen mit einer Schraubverbindung zwischen Schwingungsdämpfer und Waschaggregat und/oder Grundrahmen beim Austausch eines Schwingungsdämpfers einsetzbar.

Die vorteilhafte Weiterbildung nach Anspruch 2 stellt sicher, daß trotz der Zweiteilung der Befestigungshülse in zwei Hülsensegmente eine optimale Kraftübertragung vom Waschaggregat auf den Schwingungsdämpfer und von diesem auf den Grundrahmen möglich ist.

Die weiteren Unteransprüche beinhalten zum Teil erfinderische vorteilhafte Ausgestaltungen der Befestigungseinrichtung.

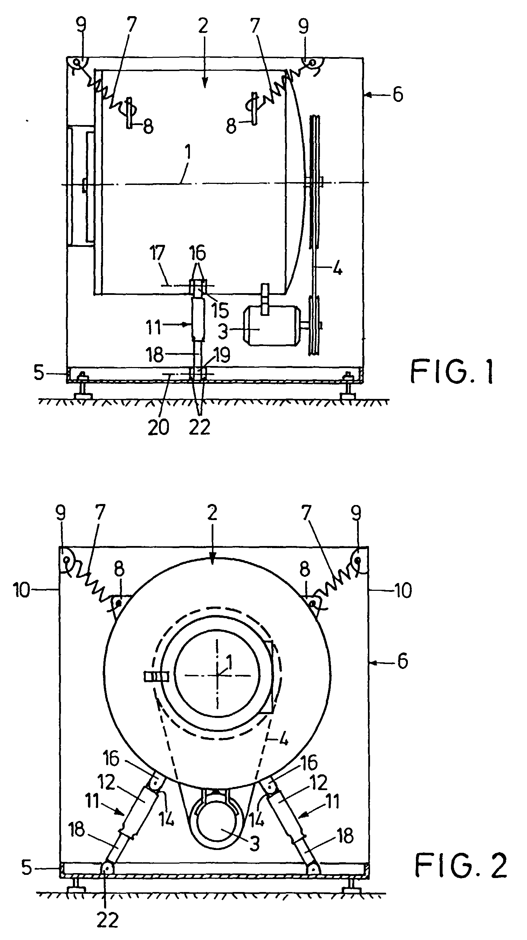

Weitere Merkmale, Vorteile und Einzelheiten der Erfindung ergeben sich aus der nachfolgenden Beschreibung eines Ausführungsbeispieles anhand der Zeichnung. Es zeigt
- Fig. 1: eine Trommelwaschmaschine in schematischer Darstellung in Seitenansicht,
- Fig. 2: die Trommelwaschmaschine gemäß Fig. 1 in Vorderansicht,
- Fig. 3: einen Teil-Längsschnitt durch eine Befestigungseinrichtung in vergrößerter Darstellung,
- Fig. 4: eine Längsansicht einer Befestigungshülse,
- Fig. 5: einen Querschnitt durch die Befestigungshülse entsprechend der Schnittlinie V-V in Fig. 4,
- Fig. 6: einen Querschnitt durch die Befestigungshülse gemäß der Schnittlinie VI-VI in Fig. 4,
- Fig. 7: einen Querschnitt durch die Befestigungshülse entsprechend der Schnittlinie VI-VI in Fig. 4, jedoch in gespreiztem Zustand und
- Fig. 8: einen Querschnitt durch eine abgewandelte Ausführungsform einer Befestigungshülse in einer Darstellung entsprechend Fig. 6.

Eine Trommelwaschmaschine mit waagerechter Trommelachse 1 weist ein schwingungsfähiges Waschaggregat 2 mit einem Antriebsmotor 3 auf, der die nicht im einzelnen dargestellte Waschtrommel über einen Riementrieb 4 antreibt. Weitere mit dem Waschaggregat 2 verbundene Bestandteile, beispielsweise ein Getriebe, sind der Einfachheit halber nicht dargestellt. Das schwingungsfähige Waschaggregat 2 ist an einem auf einem durch einen Grundrahmen 5 gebildeten Maschinengestell abgestützten Waschmaschinen-Gehäuse 6 mittels Schrauben-Zugfedern 7 aufgehängt. Die Zugfedern 7 sind einerseits an Ösen 8 angebracht, die im oberen Bereich des Waschaggregates 2 angebracht sind. Andererseits sind sie an Ösen 9 aufgehängt, die an Seitenwänden 10 des Gehäuses 6 ausgebildet sind.

Anstelle einer derartigen Aufhängung des Waschaggregates 2 an Zugfedern 7 kann auch eine bekannte Abstützung des Waschaggregates 2 über sogenannte Federbeine auf dem Maschinengestell 5 vorgesehen sein, wie sie aus der EP 0 108 217 B1 (entsprechend US-PS 4 991 412) bekannt sind. Entscheidend ist, daß das Waschaggregat 2 frei schwingungsfähig aufgehängt bzw. abgestützt ist.

Zwischen dem Waschaggregat 2 und dem Maschinengestell 5 sind weiterhin Schwingungsdämpfer 11 angeordnet, bei denen es sich um Reibungsdämpfer handelt.

Bei dem nachfolgend geschilderten Ausführungsbeispiel weist der Schwingungsdämpfer 11 ein Gehäuse 12 auf. Das Gehäuse 12 besteht im wesentlichen aus einem zylindrischen Rohr 13, das an einem Ende mittels eines Bodens 14 verschlossen ist. An der Außenseite des Bodens 14 ist eine Gelenkbüchse 15 als Anlenkelement angebracht, mittels derer der Schwingungsdämpfer 11 an einem Lagerbock 16 am Waschaggregat 2 so angebracht wird, daß der Schwingungsdämpfer 11 um eine Schwenkachse 17 relativ zum Waschaggregat 2 schwenkbar angebracht ist, die parallel zur Trommelachse 1 verläuft.

Der jeweilige Schwingungsdämpfer 11 weist weiterhin einen Stößel 18 auf, der an seinem äußeren Ende ebenfalls eine Gelenkbüchse 19 aufweist, deren Schwenkachse 20 gleichermaßen wie die Schwenkachse 17 die Mittel-Längs-Achse 21 des jeweiligen Schwingungsdämpfers 11 senkrecht schneidet. Mit dieser Gelenkbüchse 19 wird der Schwingungsdämpfer 11 in einem am Maschinengestell 5 angebrachten Lagerbock 22 in der Weise schwenkbar festgelegt, daß die Schwenkachse 20 ebenfalls parallel zur Trommelachse 1 verläuft.

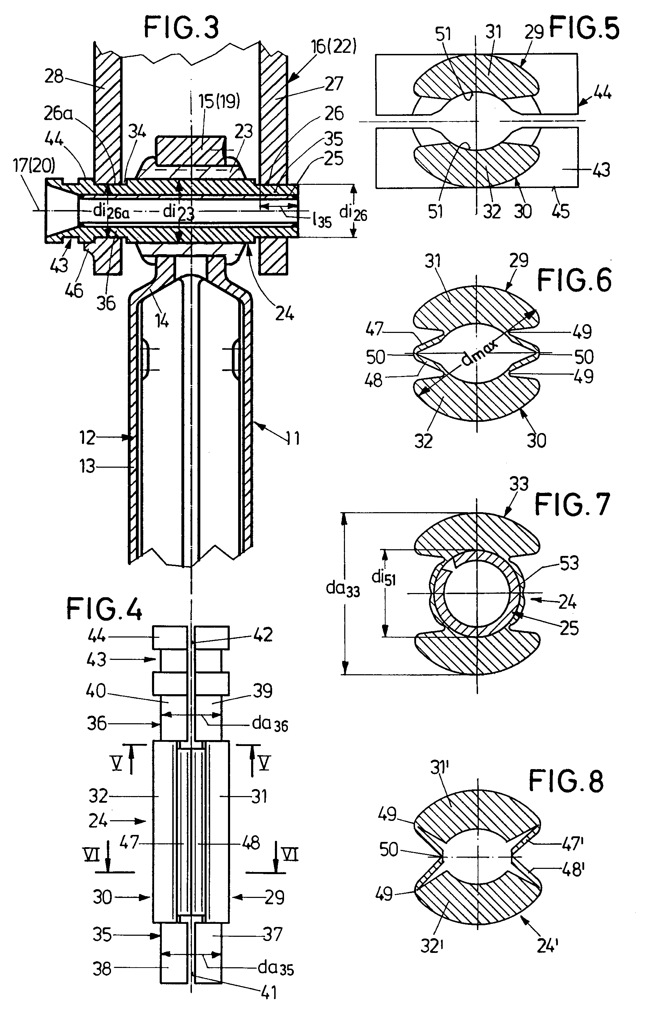

In Fig. 3 ist die Befestigung des Schwingungsdämpfers 11 am Waschaggregat 2 detaillierter dargestellt; da die Gelenkbüchsen 15 und 19 am Gehäuse 12 bzw. am Stößel 18 identisch ausgebildet sind, kann die Befestigung im Lagerbock 16 bzw. im Lagerbock 22 identisch ausgebildet sein. In Fig. 3 sind daher jeweils in Klammern auch die Bezugsziffern 19 für die Gelenkbüchse und 22 für den Lagerbock zusätzlich angegeben.

Die Gelenkbüchsen 15 (19) weisen jeweils noch eine Lagerbüchse 23 aus elastisch nachgiebigem Material, beispielsweise Gummi auf, die eine Befestigungshülse 24 aufnimmt. Die Befestigungshülse 24 wiederum wird durch ein in sie eingeführtes im wesentlichen zylindrisches Spreizelement 25 aufgeweitet und gespannt. Die Befestigungshülse 24 ist wiederum in zwei miteinander fluchtenden Bohrungen 26 bzw. 26a zweier Wangen 27, 28 der Lagerböcke 16 bzw. 22 gelagert. Diese Wangen 27, 28 nehmen jeweils die Gelenkbüchse 15 bzw. 19 zwischen sich auf.

Jede Befestigungshülse 24 besteht aus zwei spiegelsymmetrisch zueinander ausgebildeten Hülsensegmenten 29, 30. Sie weisen jeweils ein dickwandiges Lagersegment 31, 32 auf, die in aufgespreiztem Zustand der Befestigungshülse 24 einen in der Lagerbüchse 23 der Gelenkbüchsen 15 bzw. 19 drehbar angeordneten Lagerabschnitt 33 bilden, dessen Außendurchmesser da₃₃ dem Innendurchmesser di₂₃ der jeweiligen Lagerbüchse 23 entspricht. Der Außendurchmesser da₃₃ des Lagerabschnitts 33 ist größer als die Innendurchmesser di₂₆ und di₂₆ₐ der Bohrungen 26, 26a zumindest aber der Bohrung 26a durch die die Befestigungshülse 24 in ungespreiztem Zustand in den Lagerbock 16, 22 eingeschoben wird, so daß die aufgespreizte Befestigungshülse 24 fest im jeweiligen Lagerbock 16 bzw. 22 gehalten wird. Dies gilt insbesondere, weil das Spiel 34 des Lagerabschnitts 33 in Richtung der Schwenkachsen 17 bzw. 20 sehr viel kleiner ist als die Länge l₃₅ eines Stützabschnittes 35, mit dem sich die Befestigungshülse 24 in der Bohrung 26 der Wange 27 abstützt. Die Befestigungshülse 24 weist einen weiteren Stützabschnitt 36 auf, der sich in der Bohrung 26a der Wange 28 abstützt. Die Stützabschnitte 35, 36 weisen Stützsegmente 37, 38 bzw. 39, 40 auf, die mit den Lagersegmenten 31, 32 jeweils einstückig ausgebildet sind und mit diesen die Hülsensegmente 29, 30 bilden. Sie sind durch Schlitze 41, 42 voneinander getrennt. Die Außendurchmesser da₃₅ und da₃₆ der Stützabschnitte 35, 36 in aufgespreiztem Zustand der Befestigungshülse 24 entsprechen den Innendurchmessern di₂₆ und di₂₆ₐ der Bohrungen 26, 26a. An den Stützabschnitt 36 schließt sich ein Kopfabschnitt 43 der Befestigungshülse 24 an, der ebenfalls durch die Schlitze 42 geteilt ist. Dieser Kopfabschnitt 43 weist einen Anschlagbund 44 auf, der nach dem Einschieben der ungespreizten Befestigungshülse 24 in das Lager 16 bzw. 22 zur Anlage an der Außenseite der Wange 28 kommt und damit die Lage der Befestigungshülse 24 in Richtung der Schwenkachse 17 bzw. 20 einseitig festlegt. Dieser Anschlagbund 44 ist - wie Fig. 5 entnehmbar ist - nicht kreisförmig, sondern beispielsweise rechteckig, ausgebildet und liegt mit einer Außenseite 45 gegen einen an der Wange 28 ausgebildeten Anschlag 46 an, wodurch eine Verdrehsicherung zwischen Lagerbock 16 bzw. 23 und Befestigungshülse 24 gebildet wird.

Die Hülsensegmente 29, 30 sind durch Stege 47, 48 miteinander verbunden, die wiederum mit den Lagersegmenten 31, 32 einerseits und untereinander andererseits mit Filmscharnieren 49, 50 einstückig verbunden sind. Bei der Ausgestaltung nach Fig.6 und 7 sind die Stege 47, 48 im radial inneren Bereich der Lagersegmente 31, 32 angelenkt und erstrecken sich in ungespreiztem Zustand der Befestigungshülse 24 in faltenbalgartiger Anordnung spitzwinklig zueinander radial nach außen. Demgegenüber sind die Stege 47', 48' bei der Ausgestaltung nach Fig. 8 an den radial außenliegenden Seiten der Lagersegmente 31', 32' angelenkt und erstrecken sich bei ungespreizter Befestigungshülse 24' spitzwinklig zueinander radial nach innen zur jeweiligen Schwenkachse 17 bzw. 20 hin. Die Befestigungshülse 24, 24' ist einstückig aus Kunststoff gespritzt.

Der Lagerabschnitt 33 weist in ungespreiztem Zustand der Befestigungshülse 24 also bei spitzwinklig zusammengebogenen Stegen 47, 48 einen Durchmesser dₘₐₓ auf, der kleiner ist als die Innendurchmesser di₂₆ und di₂₆ₐ der Bohrungen 26 bzw. 26a in den Wangen 27, 28, so daß ein Einschieben der Befestigungshülse 24 bzw. 24' in den jeweiligen Lagerbock 16 bzw. 22 möglich ist. Wenn die in den beiden Wangen 27, 28 ausgebildeten Bohrungen 26 bzw. 26a keinen identischen Durchmesser aufweisen, dann gilt das Vorstehende zumindest für die Bohrung 26a in der Wange 28, durch die die Befestigungshülse 24 eingeschoben wird. Die Hülsensegmente 29, 30 weisen teilzylindrische Innenflächen 51 auf, deren Krümmung derart ist, daß sie einem Innendurchmesser di₅₁ bei gespreizter Befestigungshülse 24 entspricht.

Das zum Spreizen der Befestigungshülse 24 bzw. 24' eingesetzte zylindrische Spreizelement 25 ist zweckmäßigerweise als mit einem Längsschlitz 52 versehene Spannhülse 53 ausgestaltet, die aus Federstahl oder einem hartelastischen Kunststoff ausgebildet ist. Sie wird durch eine kegelstumpfförmige Einführöffnung 54 im Kopfabschnitt 43 der Befestigungshülse 24 in Richtung der jeweiligen Schwenkachse 17 bzw. 22 in axialer Richtung eingeschoben. Das zylindrische Spreizelement 25 kann aber auch als Stift ausgebildet sein. Die Ausgestaltung als Spannhülse 51 weist den Vorteil auf, daß sie auch bei Verschleiß noch fest in der Befestigungshülse 24 bzw. 24' sitzt und besser geeignet ist, Fertigungstoleranzen auszugleichen.

Die Montage des Schwingungsdämpfers 11 im jeweiligen Lagerbock 16 bzw. 22 geht in der Weise vor sich, daß die entsprechende Gelenkbüchse 15 bzw. 19 zwischen die beiden Wangen 27, 28 eingeführt wird. Anschließend wird die ungespreizte Befestigungshülse 24 bzw. 24' durch die Bohrung 26a der Wange 28, durch die Gelenkbüchse 15 bzw. 19 und die Bohrung 26 in der Wange 27 geschoben. Sie wird durch entsprechendes Drehen um die Schwenkachse 17 bzw. 20 in eine verdrehsichere Position gebracht, bei der die Außenseite 45 des Anschlagbundes 44 gegen den Anschlag 46 anliegt. In dieser Position liegen sich die dickwandigen Lagersegmente 31, 32 in Richtung der Mittel-Längs-Achse 21 des Schwingungsdämpfers 11 gegenüber. Da die Schwingungsbewegungen und die Schwingungskräfte zwischen Waschaggregat 2 und Grundrahmen 5 jeweils in Richtung der Mittel-Längs-Achse 21 übertragen werden, befinden sich auch die Stützsegmente 37, 38 bzw. 39, 40 jeweils in Richtung der Achse 21 hintereinander und übertragen die angesprochenen Schwingungskräfte auf die Lagerböcke 16 bzw. 22.

Die Schwingungsdämpfer 11 können selbstverständlich auch in der üblichen Weise als Federbeine ausgebildet sein, wie sie eingangs bereits angesprochen wurden.

## Patentansprüche

1. Befestigungseinrichtung zur Befestigung eines Schwingungsdämpfers (11) einer Waschmaschine, die ein Waschaggregat (2), einen Grundrahmen (5) und zwischen dem Waschaggregat (2) und dem Grundrahmen (5) mindestens einen eine Mittel-Längs-Achse (21) aufweisenden Schwingungsdämpfer (11) aufweist, der mittels der Befestigungseinrichtung mit dem Waschaggregat (2) und/oder dem Grundrahmen (5) verbunden ist, die einen am Waschaggregat (2) und/oder am Grundrahmen (5) angebrachten Lagerbock (16, 22) mit zwei Wangen (27, 28) mit miteinander fluchtenden Bohrungen (26, 26a), eine am Schwingungsdämpfer (11) angebrachte, zwischen den Wangen (27, 28) angeordnete, eine Schwenkachse (17, 20) aufweisende Gelenkbüchse (15, 19) und ein die Bohrungen (26, 26a) und die Gelenkbüchse (15, 19) durchsetzendes Befestigungselement aufweist,
dadurch gekennzeichnet,
daß das Befestigungselement eine aus mindestens zwei quer zur Schwenkachse (17, 20) aufspreizbaren Hülsensegmenten (29, 30) gebildete Befestigungshülse (24, 24') und ein der Innenfläche (51) der Befestigungshülse (24, 24') angepaßtes und in diese einschiebbares, die Befestigungshülse (24, 24') aufspreizendes und im Lagerbock (16, 22) in Richtung der Schwenkachse (17, 20) festlegendes Spreizelement (25) aufweist.

2. Befestigungseinrichtung nach Anspruch 1, dadurch gekennzeichnet,
daß zwei Hülsensegmente (29, 30) in Richtung der Mittel-Längs-Achse (21) des Schwingungsdämpfers (11) hintereinander angeordnet sind.

3. Befestigungseinrichtung nach Anspruch 1 oder 2, dadurch gekennzeichnet,
daß die Befestigungshülse (24, 24') einen in der Gelenkbüchse (15, 19) angeordneten Lagerabschnitt (33) und zwei in den Bohrungen (26, 26a) der Wangen (27, 28) angeordnete Stützabschnitte (35, 36) aufweist.

4. Befestigungseinrichtung nach Anspruch 3, dadurch gekennzeichnet,
daß der Lagerabschnitt (33) aus zwei Lagersegmenten (31, 32; 31', 32') gebildet ist, für deren Außendurchmesser (da₃₃) in gespreiztem Zustand der Befestigungshülse (24, 24') im Vergleich zum Innendurchmesser (di₂₆ₐ) mindestens einer Bohrung (26a) in einer Wange (28) gilt: da₃₃ > di₂₆ₐ.

5. Befestigungseinrichtung nach Anspruch 4, dadurch gekennzeichnet,
daß der Lagerabschnitt (33) nur geringes Spiel (34) in Richtung der Schwenkachse (17, 20) gegenüber mindestens einer Wange (28) hat.

6. Befestigungseinrichtung nach einem der Ansprüche 1 bis 5, dadurch gekennzeichnet,
daß die Hülsensegmente (29, 30) mittels streckbarer Stege (47, 48; 47', 48') einstückig miteinander verbunden sind.

7. Befestigungseinrichtung nach Anspruch 6, dadurch gekennzeichnet,
daß die Stege (47, 48; 47', 48') mittels Filmscharnieren (49, 50) miteinander und mit den Hülsensegmenten (29, 30) verbunden sind.

8. Befestigungseinrichtung nach Anspruch 6 oder 7, dadurch gekennzeichnet,
daß die Stege (47, 48; 47', 48') faltenbalgartig angeordnet sind.

9. Befestigungseinrichtung nach einem der Ansprüche 1 bis 8, dadurch gekennzeichnet,
daß das Spreizelement (25) als Spannhülse (51) ausgebildet ist.

10. Befestigungseinrichtung nach einem der Ansprüche 1 bis 9, dadurch gekennzeichnet,
daß die Befestigungshülse (24, 24') einstückig aus Kunststoff gespritzt ist.
